(19) Europäisches Patentamt
European Patent Office
Office européen des brevets

(11) Veröffentlichungsnummer: **0 282 862 B1**

(12) **EUROPÄISCHE PATENTSCHRIFT**

(45) Veröffentlichungstag der Patentschrift: **18.12.91**

(51) Int. Cl.5: **C08G 69/48**, C08G 73/02, C08G 59/10, C08G 59/14

(21) Anmeldenummer: **88103504.2**

(22) Anmeldetag: **07.03.88**

Die Akte enthält technische Angaben, die nach dem Eingang der Anmeldung eingereicht wurden und die nicht in dieser Patentschrift enthalten sind.

(54) **Stickstoffhaltige, wasserlösliche Verbindungen.**

(30) Priorität: **17.03.87 DE 3708544**

(43) Veröffentlichungstag der Anmeldung: **21.09.88 Patentblatt 88/38**

(45) Bekanntmachung des Hinweises auf die Patenterteilung: **18.12.91 Patentblatt 91/51**

(84) Benannte Vertragsstaaten: **AT BE CH DE FR GB IT LI NL SE**

(56) Entgegenhaltungen:
**EP-A- 0 031 899**
**EP-A- 0 033 104**
**EP-A- 0 126 176**
**GB-A- 1 206 958**
**US-A- 3 953 330**

(73) Patentinhaber: **BAYER AG**
**W-5090 Leverkusen 1 Bayerwerk(DE)**

(72) Erfinder: **Bachem, Henning, Dr.**
**Wolfskaul 10**
**W-5000 Köln 80(DE)**
Erfinder: **Muszik, Janos, Dr.**
**Gabriele-Münter-Strasse 12**
**W-5090 Leverkusen 1(DE)**
Erfinder: **Schröer, Wolf-Dieter, Dr.**
**Christian-Hess-Strasse 65**
**W-5090 Leverkusen 1(DE)**
Erfinder: **Süling, Carlhans, Dr.**
**Carl-Leverkus-Strasse 10**
**W-5068 Odenthal(DE)**

EP 0 282 862 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wasserlösliche vernetzbare Verbindungen, die durch Umsetzung von Halogenhydrin-Gruppen enthaltenden Reaktionsprodukten aus Ammoniak oder Mono- oder Polyaminen und Epihalogenhydrin oder 1,3-Dihalogen-2-hydroxy-propan mit anorganischen Basen und anschließende Umsetzung der entstehenden Epoxy-Gruppen enthaltenden Verbindungen mit halogenfreien Säuren oder deren Derivaten zu 1-Acyloxy-2-hydroxy-propyl-Gruppen enthaltenden Verbindungen erhältlich sind, ihre Herstellung und ihre Verwendung zur Naßfestausrüstung von Papier, zur Nachbehandlung reaktiv und substantiv gefärbter Cellulose und zur Ausrüstung von Wolle.

Halogenhydrin-Gruppen enthaltende Umsetzungsprodukte aus Ammoniak oder Mono- oder Polyaminen mit Epichlorhydrin oder 1,3-Dihalogen-2-hydroxy-propan sind bekannt.

So werden beispielsweise in den deutschen Offenlegungsschriften 22 29 219, 22 57 271, 29 38 588 und 29 49 870, den deutschen Patentschriften 17 20 905, 17 71 043 und 19 06 450, den europäischen Patentanmeldungen 0 131 200 und 0 126 176 und den US-Patentschriften 29 26 154, 32 24 990 und 33 32 901 selbstvernetzende, wasserlösliche Reaktionsprodukte aus Epihalogenhydrinen und basischen Polyamidaminen oder Polyaminen bzw. Gemischen hieraus beschrieben, wobei jeweils ein Überschuß an Epihalogenhydrin pro Äquivalent an freien basischen Aminogruppen verwand wird. In der deutschen Offenlegungsschrift 16 96 248 werden ähnliche Harze beschrieben, die durch Umsetzung basischer Polyamidamine mit Glycerindichlorhydrin erhalten werden.

Aus den deutschen Offenlegungsschriften 15 95 302 und 19 06 561 sind wasserlösliche Kondensationsprodukte aus $\varepsilon$-Caprolactam, Polyaminen, Polyamidaminen und Epichlorhydrin bekannt.

In den deutschen Offenlegungsschriften 15 95 358 und 23 64 443 werden wasserlösliche, harzartige Kondensationsprodukte beschrieben, die durch Umsetzung eines Vorproduktes aus Polyaminen bzw. Polyamidaminen und einer epoxygruppenfreien $\alpha,\omega$-Di- oder Polyhalogenverbindung mit Epihalogenhydrin zugänglich sind.

Nach einem weiteren bekannten Verfahren der deutschen Offenlegungsschrift 20 52 023 werden wasserlösliche, härtbare Harze durch Umsetzung von Epichlorhydrin mit Ammoniak und/oder Polyaminen gewonnen.

Außerdem sind aus der deutschen Offenlegungsschrift 17 70 150 wasserlösliche, kationische Vinylpolymere bekannt, die durch Transamidierung von Polyacrylamid mit Polyaminen und anschließende Umsetzung mit Epichlorhydrin zugänglich sind.

Aus den deutschen Offenlegungsschriften 17 95 416 und 15 46 323 sind wasserlösliche Reaktionsprodukte aus Polyethylenimin und Epichlorhydrin oder Dichlorhydrin bekannt.

Nach einem weiteren bekannten Verfahren der europäischen Patentanmeldung 01 46 000 sind wasserlösliche Harze aus Polyvinylimidazol und Epichlorhydrin bekannt.

In der deutschen Offenlegungsschrift 23 64 583 und der US-Patentschrift 39 47 383 werden Polykondensate aus Ammoniak und Epichlorhydrin beschrieben.

Bisher in der Praxis eingesetzte und durch die zitierte Vorliteratur beschriebene vernetzbare Harze enthalten im allgemeinen 1,0 bis 2,5 Mol Epihalogenhydrin bezogen auf basischen Stickstoff im Polyamin.

US 3,953,330 offenbart ein Verfahren zur Ausflockung fein verteilter Feststoffe aus wäßriger Lösung durch Behandlung mit wasserlöslichen, kationischen Polymeren, hergestellt durch Polymerisation von Epichlorhydrin mit bestimmten Alkylenpolyaminen.

Aus EP 0 126 176 ist die Umsetzung von Epihalogenhydrin mit Polyaminopolyamiden, hergestellt aus Polyalkylenpolyaminen und Oxalsäure oder deren Diestern, zur Gewinnung von Naßfestmitteln bekannt.

Ein Verfahren zur Herstellung von säurestabilisierten Harzen aus bestimmten Polyamiden und Epichlorhydrin ist aus GB 1,206,958 bekannt.

Die Produkte weisen einen nachweisbar hohen Gehalt an Halogenhydrin-Reaktivgruppen auf; diese sind notwendig, um ausreichend vernetzungsfähige, genügend reaktive Produkte zu erhalten.

Halogenhydrin-Gruppen-enthaltende Umsetzungsprodukte, wie sie vorstehend genannt sind, werden zur Behandlung von Wolle, Nachbehandlung von Färbungen auf Baumwolle, vor allem aber zur Naßfestausrüstung von Papier verwendet.

Obwohl die Halogenhydrin-Gruppen-haltigen Umsetzungsprodukte aufgrund ihrer kationischen Ladung eine hohe Affinität gegenüber hydratisierter Cellulose aufweisen, erfolgt im allgemeinen beim Einsatz als Naßfestmittel in der Papierherstellung keine vollständige Anlagerung an die Faser. Je nach Stoffdichte und -Zusammensetzung gelangen Anteile der Produkte unumgesetzt in das Abwasser und tragen zu dessen Belastung mit organisch gebundenem Halogen bei.

Der Erfindung lag daher die Aufgabe zugrunde, lagerfähige kationische Verbindungen zu schaffen, die im neutralen bis alkalischen Milieu vernetzbar und den gebräuchlichen Epichlorhydrin-Harzen in der

Naßfestwirkung zumindest ebenbürtig sind und gleichzeitig deutlich weniger organisch gebundenes Halogen enthalten.

Überraschenderweise wurde nun gefunden, daß durch die erfindungsgemäße Nachbehandlung von Halogenhydrin-Gruppen-haltigen Verbindungen mit anorganischen Basen bei einem PH-Wert von 8,5 bis 12 und Beibehalt basischer PH-Werte, und anschließende Umsetzung der entstehenden Epoxy-Gruppen-enthaltenden Verbindungen mit halogenfreien Säuren oder deren Derivaten, bis zu pH-Werten $\leq 6$, neue, lagerstabile Verbindungen zugänglich sind, die erheblich weniger organisch gebundenes Halogen enthalten und hervorragende Naßfestwerte ergeben.

Unter Halogenhydrin-Gruppen-haltigen Verbindungen sind Produkte zu verstehen, die durch Umsetzung von Polyaminen mit Epihalogenhydrin oder 1,3-Dihalogen-2-hydroxy-propan bevorzugt im Molverhältnis von 1,0 bis 3,6 Mol Epihalogenhydrin oder 1,3-Dihalogen-2-hydroxy-propan pro Mol basischer Stickstoff erhalten werden.

Die Umsetzung mit anorganischen Basen erfolgt bevorzugt im Molverhältnis von 0,1 bis 1,75 Mol Base pro Mol Halogenhydrin-Gruppe.

Die Weiterreaktion der entstehenden Epoxy-Gruppen aufweisenden Verbindungen mit den halogenfreien Säuren oder Säure-Derivaten erfolgt bis zu pH-Werten $\leq 6$.

Unter Polyaminen werden verstanden:

1. wasserlösliche, basische, stickstoffhaltige Polymere, die durch Polymerisation von Vinyl- oder Allyl- und basische Amino-Gruppen haltigen Monomeren zugänglich sind,
2. wasserlösliche Amine mit primären und/oder sekundären und gegebenenfalls tertiären Amino-, Carbonamid- oder Hydroxy-Gruppen.

Die Erfindung betrifft besonders stickstoffhaltige, wasserlösliche, vernetzbare Polykondensate, die durch Umsetzung von

A) einem wasserlöslichen, aliphatischen Mono- oder Polyamin mit primären, sekundären und gegebenenfalls tertiären Amino-, Carbonamid-, oder Hydroxy-Gruppen oder Ammoniak oder Gemischen hieraus

mit

B) einem Epihalogenhydrin oder 1,3-Dihalogen-2-hydroxy-propan und gegebenenfalls gleichzeitige oder anschließende Zugabe eines Polyamins wie in A)

im Molverhältnis von 1,0 bis 3,6 Mol der Komponente B) pro Mol basischer Stickstoff der insgesammt eingesetzten Komponente A),

C) Umsetzung der Produkte A/B mit einer anorganischen Base im Molverhältnis von 0,1 bis 1,75 Mol Base pro Mol Halogenhydrin-Gruppe in A/B

und

D) Umsetzung der basischen Produkte C) mit einer halogenfreien Säure oder deren Säure-Derivat bis zu pH-Werten < 6

erhältlich sind.

Die Polykondensate haben vorzugsweise ein Molekulargewicht von 1.000 - 50.000.

Besonders bevorzugte stickstoffhaltige, wasserlösliche Polykondensate sind durch Umsetzung von

A.

1) einem wasserlöslichen Polyamin der Formeln (II) oder (III) oder Gemischen hieraus

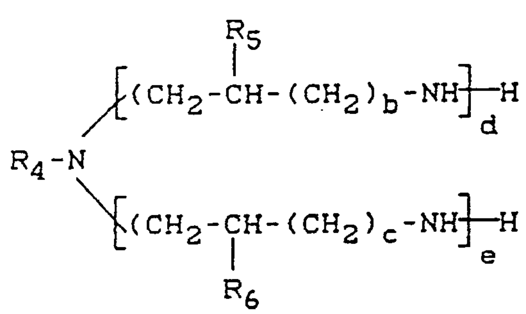

(II)

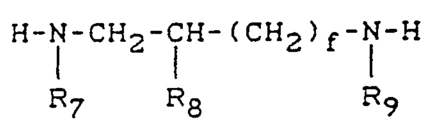

(III)

worin

$R_4$, $R_7$ und $R_9$ für Wasserstoff oder einen gegebenenfalls durch Hydroxy oder Amino substituierten $C_1$-$C_5$-Alkylrest,
, $R_5$, $R_6$ und $R_8$ unabhängig voneinander für Wasserstoff, Methyl oder Ethyl,
, b, c und f unabhängig voneinander für eine ganze Zahl von 0 bis 4,
d und e unabhängig voneinander für eine ganze Zahl von 1 bis 6
stehen,
und/oder
2) einem wasserlöslichen Polyamidamin mit einem Molekulargewicht von mindestens 800, hergestellt aus

α) aliphatischen Polyaminen, die mindestens zwei zur Amidbildung befähigte Aminogruppen und mindestens eine weitere sekundäre oder tertiäre Aminogruppe enthalten bzw. aus Gemischen dieser Polyamine mit aliphatischen Diaminen der Formel (III), Ammoniak oder Ethylenimin

und

β) aliphatischen oder aromatischen Dicarbonsäuren mit 2 bis 12 C-Atomen bzw. deren funktionellen Derivaten, wie Anhydriden, Estern oder Halbestern

und/oder

γ) 3 bis 6 C-Atome enthaltenden Aminocarbonsäuren oder deren Lactamen

oder

3) einem durch Polymerisation von 1,2-Alkyleniminen hergestellten Polyalkylenimin
mit
B. einem Epihalogenhydrin oder 1,3-Dihalogen-2-hydroxy-propan und gegebenenfalls gleichzeitige oder anschließende Zugabe eines Polyamins der Formeln (II) - (III) im Molverhältnis von 1,0 bis 3,6 Mol, bevorzugt 1,1 bis 2,5 Mol, der Komponente B pro Mol Basenstickstoff der insgesammt eingesetzten Komponente A,
und
C. Umsetzung der Produkte A/B mit einer anorganischen Base im Molverhältnis von 0,1 bis 1,75 Mol, bevorzugt 0,2 bis 1,5 Mol, Base pro Mol Halogenhydrin-Gruppe in A/B
und
D. Umsetzung der basischen Produkte C mit einer halogenfreien Säure oder deren Säure-Derivat bis zu pH-Werten ≦6, bevorzugt 2 bis 5,5
erhältlich.

Die wäßrigen Lösungen weisen bei einem Feststoffgehalt von 5 bis 35 Gew.-%, vorzugsweise 10 bis 30 Gew.-%, eine Viskosität von 15 bis 400 mPas, vorzugsweise 20 bis 300 mPas, bei 25 °C auf.

Die Herstellung der erfindungsgemäßen Reaktionsprodukte erfolgt bevorzugt in wäßrigem Medium. Es können aber ebenfalls andere polare Lösungsmittel, wie Ethylenglykol, Diethylenglykol, Triethylenglykol, Polyethylenglykol, Glycerin, Isopropanol, Ethanol, Methanol, tert.-Butanol, Dimethylformamid oder Gemische hiervon mit Wasser verwendet werden.

Die Umsetzung der Ausgangskomponenten A und B erfolgt in bekannter Weise. Man rührt dabei wäßrige oder wäßrigorganische, etwa 15 bis 60 %ige Lösungen der beiden Komponenten bei einer Temperatur von 25 bis 95 °C, vorzugsweise 40 bis 80 °C, so lange, bis eine Probe der Reaktionsmischung in Form einer 15 %igen wäßrigen Lösung bei 25 °C eine Viskosität von 20 bis 200, vorzugsweise 30 bis 150 mPas, aufweist.

Danach setzt man dem viskosen Gemisch zur Beendigung der Einwirkung und zur Stabilisierung der selbstvernetzenden Produkte Säuren zu, daß der pH-Wert der Lösung zwischen 1 und 6, vorzugsweise 2 und 5,5, liegt. Als stabilisierende Säuren sind prinzipiell alle Säuren geeignet. Vorzugsweise sind halogenfreie Säuren und insbesondere die später aufgeführten Säuren verwendbar.

Im nächsten Reaktionsschritt werden die Zwischenprodukte A/B mit Hilfe einer anorganischen Base, wie LiOH, CsOH, $Ca(OH)_2$, $Ba(OH)_2$, $NH_3$, $Na_2CO_3$, $K_2CO_3$, $CaCO_3$, $Na_3PO_4$.
und besonders KOH und NaOH oder Gemischen hieraus
bei einer Temperatur von 15 bis 80 °C, vorzugsweise 20 bis 70 °C, auf pH-Werte von 8 bis 14, vorzugsweise 8,5 bis 12, eingestellt.

Hierbei wird u.a. sowohl freie Säure neutralisiert als auch eine Epoxidierung der Halogenhydrin-Gruppen unter Salzbildung bewirkt. Unter Beibehalt basischer pH-Werte wird das Reaktionsgemisch anschließend 10 Minuten bis 10 Stunden, bevorzugt 15 Minuten bis 8 Stunden, besonders bevorzugt 20 Minuten bis 6 Stunden, gerührt.

Anschließend wird bei 15 bis 80 °C, vorzugsweise 20 bis 70 °C, zur Ausbildung der erfindungsgemäßen Verbindungen so viel Säure oder Säure-Derivat zugegeben, daß der pH-Wert der Lösung zwischen 1 und 6,

vorzugsweise 2 und 5,5, liegt.

Als Säuren bzw. Säure-Derivate sind zu nennen:

1. halogenfreie Mineralsäuren bzw. sauer reagierende Derivate dieser Säuren, wie Amidosulfonsäure, schweflige Säure, Kieselsäure, Borsäure, Salpetersäure, Kohlensäure und besonders Schwefel- und Phosphorsäure,

2. halogenfreie, gegebenenfalls Hydroxy-Gruppen enthaltende, Mono- oder Polycarbonsäuren bzw. Derivate dieser Säuren, wie Essigsäure, Essigsäureanhydrid, Propionsäure, Oxalsäure, Malonsäure, Bernsteinsäure, Glutarsäure, Adipinsäure, Maleinsäure, Milchsäure, Weinsäure und besonders Ameisensäure, Äpfelsäure und Citronensäure

oder Gemische hieraus.

Unter Säure-Derivaten sind sauer reagierende Derivate der oben genannten Säuren, insbesondere Anhydride und saure Salze, zu verstehen.

Durch Verdünnen mit Lösungsmittel wird der Feststoffgehalt der fertigen Produkte anschließend auf den gewünschten Gehalt eingestellt.

In einer bevorzugten Ausführungsform werden die Ausgangskomponenten A, B zunächst in der Weise miteinander zur Umsetzung gebracht, daß man 15 bis 60 %ige, vorzugsweise 20 bis 50 %ige, Lösungen in Wasser oder vorstehend genannten anderen polaren Lösungsmitteln oder Gemischen hieraus mit Wasser bei einer Temperatur von 25 bis 95° C, vorzugsweise 40 bis 80° C, miteinander verrührt.

Bereits während der Polykondensation wird dann bei Temperaturen von 15 bis 95° C, vorzugsweise 20 bis 70° C, mit Hilfe einer anorganischen Base auf pH-Werte von 8 bis 14, vorzugsweise 8,5 bis 12, eingestellt.

Als anorganische Basen sind die vorstehend genannten besonders geeignet.

Hierbei kann Ringschluß der im Polykondensat vorliegenden Halogenhydrin-Gruppen zu Epoxy-Gruppen und Salzbildung erfolgen.

Unter Beibehalt basischer pH-Werte wird das Reaktionsgemisch anschließend 10 Minuten bis 10 Stunden, bevorzugt 15 Minuten bis 8 Stunden, bei 15 bis 80° C, vorzugsweise 20 bis 70° C, gerührt.

Man gibt dann bei dieser Temperatur so viel Säure bzw. Säure-Derivat zu, daß der pH-Wert der Lösung bei 1 bis 6, vorzugsweise 2,0 bis 5,5, liegt.

Als Säuren bzw. Säure-Derivate sind die vorstehend genannten besonders geeignet.

Durch Verdünnen mit Lösungsmittel wird der Feststoffgehalt der fertigen Produkte anschließend wunschgemäß eingestellt.

Als Polyamine (II) seien genannt:

Diethylentriamin, Triethylentetramin, Tetraethylenpentamin, Pentaethylenhexamin, Hexaethylenheptamin, Heptaethylenoctamin, Dipropylentriamin, Tripropylentetramin, Methyl-bis-(3-aminopropyl)-amin, Ethyl-bis-(3-aminopropyl)-amin, 2-Hydroxy-ethyl-bis-(3-aminopropyl)-amin, Dihexamethylentriamin oder Gemische hieraus.

Als Diamine (III) seien erwähnt:

Ethylendiamin, N-(2-hydroxyethyl)-ethylendiamin, N,N'-Dimethyl-ethylendiamin, 1,2-Diaminopropan, 1,3-Diaminopropan, N,N'-Dimethyl-1,3-diaminopropan, N-Methyl-1,3-diamino-propan und 1,6-Diaminohexan.

Beispiele für Polyamine (A 2 $\alpha$) sind bei den Polyaminen (II) genannt.

Bevorzugt sind:

Diethylentriamin, Triethylentetramin, Tetraethylenpentamin, Pentaethylenhexamin, Hexaethylenheptamin, Dipropylentriamin, Methyl-bis-(3-amino-propyl)-amin, Dihexamethylentriamin bzw. Gemische hieraus oder Gemische hieraus mit, Ethylendiamin oder Ethylenimin.

Bevorzugte Dicarbonsäuren (A 2 $\beta$) sind:

Oxalsäure, Bernsteinsäure, Malonsäure, Glutarsäure, Adipinsäure, Sebacinsäure, 1,12-Dodecandisäure, Itaconsäure, Terephthalsäure und Isophthalsäure.

Bevorzugte Verbindung (A 2 $\gamma$) ist $\epsilon$-Caprolactam.

Bevorzugtes 1,2-Alkylenimin (A 3) ist Ethylenimin.

Bevorzugte Beispiele für B sind:

Epichlorhydrin, Epibromhydrin und 1,3-Dichlor-2-hydroxy-propan.

Gegenstand der Erfindung sind auch wasserlösliche vernetzbare, basische, Aminogruppen enthaltende Polymere und Polykondensate, die gegenüber Papier reaktive Gruppen z.B. der Formel

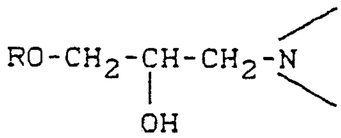

enthalten, in der R für den Rest einer Hydroxycarbonsäure, insbesondere der Wein-, Äpfel-, Citronen- oder Milchsäure, steht.

Auf die beschriebene Weise werden unter technisch einfachen und gut handhabbaren Bedingungen klare, über Monate auch bei einem hohen Feststoffgehalt von bis zu 35 Gew.-% lagerstabile, vorzugsweise wäßrige, Lösungen erhalten, die hervorragend die Naßfestigkeit eines damit ausgerüsteten Papieres verbessern.

Die Ausrüstung des Papieres mit den erfindungsgemäßen Polymeren erfolgt in bekannter Weise. Bevorzugt werden die Polymeren in Form wäßriger Lösungen der wäßrigen Suspension des Papierrohstoffes zugesetzt, die dann zu Papier verarbeitet wird. Die Zugabemengen liegen je nach gewünschtem Effekt zwischen 0,5 - 4 Gew.-% der wäßrigen Lösung (bezogen auf Papierrohstoff) mit einem Gehalt an Polymeren von 10 - 20 Gew.-%. Bei besonders hohen Anforderungen an die Naßfestigkeit werden noch höhere Mengen verwendet. Beispielsweise sind bei Laminatpapieren mit hohem Aschegehalt und niedrigem Flächengewicht Zusatzmengen von 6 Gew.-% und mehr erforderlich.

Die erfindungsgemäßen Polymeren unterscheiden sich von bekannten Polyamin-Epihalogenhydrin Umsetzungsprodukten hinsichtlich ihres Gehaltes an organisch gebundenem Halogen und des AOX-Wertes (= adsorbierbares organisches Halogen). Im Gegensatz zu den ansonsten - auch bei einer Ansäuerung mit halogenfreien Säuren - üblichen hohen Gehalten an Halogenhydrin-Reaktivgruppen weisen die neuen Produkte einen wesentlich geringeren Gehalt an diesen Reaktivgruppen auf.

So sind der organische Halogengehalt der erfindungsgemäßen Verbindungen und der AOX-Wert 50 bis 95 %, vorzugsweise 50 bis 90 %, geringer als bei bekannten Polyamin-Epihalogenhydrin-Umsetzungsprodukten.

Eine Verwendung der neuen Produkte führt nun zu einem deutlich geringeren organischen Halogengehalt im Abwasser der Papiermaschine und somit zu einer wesentlich geringeren ökologischen Belastung.

Naturgemäß können die erfindungsgemäßen Verbindungen auch zur Nachbehandlung von Reaktiv- oder Substantiv-Färbungen auf Baumwolle oder zur Ausrüstung von Wolle verwendet werden.

Beispiel 1

a) Zu einer Vorlage von 923 g einer 50 %igen, wäßrigen Lösung eines Polyamidamins der DE-B-17 71 043, Spalte 4, Seile 4 bis 25, 15 g Methyl-bis-(3-amino-propyl)-amin und 1.891 ml Wasser tropft man unter Rühren bei 30 °C in 45 Minuten 308 g Epichlorhydrin und rührt 1 Stunde bei 30 °C nach.

Anschließend wird auf 60 °C aufgeheizt, wobei die Viskosität des Gemisches steigt. Hierbei werden nochmals 1.500 ml Wasser zugegeben. Bei Erreichen der gewünschten Viskosität stellt man den pH-Wert mit Hilfe einer Schwefelsäure-Lösung auf pH: 3 ein, verdünnt mit Wasser und entgast das fertige Produkt im Vakuum.

Viskosität: 47 mPas (25 °C)
Feststoffgehalt: 15,0 Gew.-%
organ. Cl-Gehalt: 1,2 %
AOX-Wert * : 10,5 g/l

b) Mit Hilfe einer 45 %igen NaOH-Lösung werden 700 g eines Vorproduktes gemäß 1 a) bei einer Temperatur von 47 °C unter Rühren auf pH: 11 eingestellt. Man rührt 45 Minuten unter Beibehalt des pH-Wertes nach und stellt dann mittels einer Schwefelsäure-Lösung auf pH: 3 ein.

Viskosität: 53 mPas
Feststoffgehalt: 17,0 Gew.-%
organ. Cl-Gehalt: 0,48 %
AOX-Wert: 4,37 g/l

* Die Bestimmung erfolgte nach DIN 38049 [Deutsche Einheitsverfahren zur Wasser-, Abwasser- und Schlammuntersuchung. Summarische Wirkungs- und Stofftrenngrößen (Gruppe H), Bestimmung der adsorbierbaren organisch gebundenen Halogene (AOX)]. Die Proben werden hierzu auf einen maximalen TOC (total organic carbon)-Gehalt von 10 mg/l verdünnt und dann sofort auf ihren AOX-Wert untersucht.

Beispiel 2

700 g eines wasserlöslichen Vorproduktes gemäß Beispiel 1 a) werden bei 50 °C unter Rühren mit einer 45 % NaOH-Lösung versetzt. Dabei wird der pH-Wert auf pH: 9 eingestellt.

Anschließend rührt man unter Beibehalt des obigen pH-Wertes 5 Stunden bei 50 °C nach und stellt dann mit Hilfe einer Schwefelsäure-Lösung auf pH: 2,7 ein.

Viskosität: 40 mPas
Feststoffgehalt: 16,7 Gew.-%
organ. Cl-Gehalt: 0,41 %
AOX-Wert: 2,49 g/l

Beispiel 3

a) Zu einer Vorlage von 1.891 ml Wasser, 15 g Methyl-bis-(3-amino-propyl)-amin und 923 g einer 50 %igen, wäßrigen Lösung eines Polyamidamins der DE-B-17 71 043, Spalte 4, Zeile 4 bis 25, tropft man unter Rühren in 45 Minuten bei 30 °C 308 g Epichlorhydrin und rührt 1 Stunde bei dieser Temperatur nach.

Im Anschluß wird auf 60 °C erwärmt, nochmals 1.500 ml Wasser zugesetzt und bis zum Erreichen der gewünschten Viskosität gerührt.

Jetzt wird mittels eines Gemisches aus Ameisensäure (85 %ig in Wasser) und Wasser verdünnt und auf pH: 3,5 eingestellt. Das fertige Produkt wird nun im Vakuum entgast.

Viskosität: 60 mPas (25 °C)
Feststoffgehalt: 14,8 Gew.-%
organ. Cl-Gehalt: 1,1 %
AOX-Wert: 9,4 g/l

b) 700 g eines in Wasser gelösten Vorproduktes gemäß Beispiel 3 a) werden bei einer Temperatur von 60 °C unter Rühren mit einer 45 %igen NaOH-Lösung auf pH: 9 eingestellt.

Im Anschluß rührt man unter Beibehalt des pH-Wertes 6 Stunden bei 50 °C nach und stellt dann mit einer Ameisensäure-Lösung auf pH: 3,4 ein.

Viskosität: 56 mPas (25 °C)
Feststoffgehalt: 15,0 Gew.-%
organ. Cl-Gehalt: 0,11 %
AOX-Wert: 0,55 g/l

Beispiel 4

700 g eines in Wasser gelösten Vorproduktes gemäß Beispiel 3 a) werden bei 25 °C unter Rühren mit einer 30 %igen NaOH-Lösung auf pH: 12 eingestellt und im Anschluß 2 Stunden bei 35 °C nachgerührt. Danach stellt man mit einem Gemisch aus Ameisensäure/Wasser auf pH: 3,5 ein.

Viskosität: 43 mPas
Feststoffgehalt: 15,0 Gew.-%
organ. Cl-Gehalt: 0,41 %
AOX-Wert: 2,11 g/l

Beispiel 5

a) Zu einer Vorlage von 1.891 ml Wasser und 930 g einer 50 %igen, wäßrigen Lösung eines Polyamidamins der DE-B-17 71 043, Spalte 4, Zeile 4 bis 25, tropft man unter Rühren in 30 Minuten bei 30 °C 308 g Epichlorhydrin und rührt 1 Stunde bei dieser Temperatur nach.

Danach erwärmt man auf 60 °C, setzt nach 1 Stunde 1.500 ml Wasser zu und rührt bis zum Erreichen der gewünschten Viskosität.

Mit Hilfe einer Äpfelsäure-Wasser-Lösung stellt man den pH-Wert nun auf pH: 3,4 ein.

Viskosität: 80 mPas
Feststoffgehalt: 15,9 Gew.-%
organ. Cl-Gehalt: 1,1 %
AOX-Wert: 9,9 g/l

b) Zu 700 g eines in Wasser gelösten Vorproduktes gemäß Beispiel 5 a) gibt man bei 50 °C eine 45 %ige NaOH-Lösung, so daß ein pH-Wert von 10 eingestellt ist.

Anschließend rührt man bei 45°C 3 Stunden nach und stellt mittels einer Äpfelsäure-Lösung auf pH: 3,5.

Viskosität: 48 mPas (25°C)
Feststoffgehalt: 15,0 Gew.-%
organ. Cl-Gehalt: 0,17 %
AOX-Wert: 1,04 g/l

Beispiel 6

a) In einem Dreihalskolben legt man 324 g Diethylentriamin vor und setzt dann 438 g Adipinsäure und 169,5 g ε-Caprolactam unter Rühren zu. Die Temperatur steigt dabei auf 100°C an. Anschließend heizt man in 3 Stunden auf 190°C, wobei das Reaktionswasser gleichmäßig abdestilliert, kühlt auf 150°C ab und setzt 800 ml Wasser zu. Man rührt noch 1 Stunde bei 85°C nach und kühlt ab.

Viskosität: 330 mPas
Feststoffgehalt: 51,7 Gew.-%
Basenäquivalentgewicht: 429

b) Zu einer Vorlage von 215 g eines Vorproduktes gemäß Beispiel 6 a) und 350 ml Wasser gibt man bei 30°C in 45 Minuten 58,7 g Epichlorhydrin und rührt 1 Stunde bei 30°C nach.

Danach erwärmt man auf 65°C, wobei die Viskosität steigt. Während der Kondensation setzt man portionsweise 350 ml Wasser zu. Sobald die gewünschte Viskosität erreicht ist, stellt man mit einer Salzsäure-Lösung auf pH: 3,0 ein.

Viskosität: 74 mPas (25°C)
Feststoffgehalt: 15,3 Gew.-%
organ. Cl-Gehalt: 1,11 %
AOX-Wert: 6,44 g/l

c) 700 g eines Vorproduktes gemäß Beispiel 6 b) werden mit einer NaOH-Lösung auf pH: 10 eingestellt und bei 50°C 4 Stunden gerührt, wobei der pH-Wert durch Zugabe von NaOH bei 10 gehalten wird.

Im Anschluß wird das Gemisch mittels einer Citronensäure-Wasser-Lösung auf pH: 3,5 eingestellt.

Viskosität: 66 mPas (25°C)
Feststoffgehalt: 15,0 Gew.-%
organ. Cl-Gehalt: 0,45 %
AOX-Wert: 1,43 g/l

Beispiel 7

a) Das Umsetzungsprodukt eines Polyamidamins gemäß der EP-A-0 131 200, Beispiel 2 a), mit Epichlorhydrin analog der EP-A-0 131 200, Beispiel 2 b) wurde mit einer Schwefelsäure-Lösung auf pH: 4 eingestellt.

Viskosität: 49 mPas (25°C)
Feststoffgehalt: 20,0 Gew.-%
organ. Cl-Gehalt: 1,18 %
AOX-Wert: 9,21 g/l

b) 700 g eines Produktes gemäß Beispiel 7 a) werden bei 60°C mit Hilfe einer wäßrigen NaOH-Lösung auf pH: 9,5 eingestellt und unter Beibehalt des pH-Wertes 4 Stunden gerührt. Anschließend säuert man mittels einer Schwefelsäure-Lösung auf pH: 4 an.

Viskosität: 52 mPas (25°C)
Feststoffgehalt: 20,0 Gew.-%
organ. Cl-Gehalt: 0,20 %
AOX-Wert: 1,35 g/l

Beispiel 8

a) Zu einer Vorlage aus 51 g Methyl-bis-(3-amino-propyl)-amin und 270 ml Wasser gibt man bei 30°C in 2 Stunden 119 g Epichlorhydrin.

Anschließend wird auf 55°C erwärmt und bei der gewünschten Viskosität mit einer Schwefelsäure/Essigsäure-Lösung auf pH: 3 angesäuert.

Viskosität: 195 mPas (25°C)
Feststoffgehalt: 36,0 Gew.-%

organ. Cl-Gehalt: 2,28 %
AOX-Wert: 26,5 g/l

b) 700 g eines in Wasser gelösten Produktes gemäß Beispiel 9 a) und 700 ml Wasser werden bei 40 °C mit einer 20 %igen KOH-Lösung auf pH: 11 eingestellt und bei dieser Temperatur 2 Stunden gerührt. Danach stellt man mit einer Schwefelsäure-Essigsäure-Lösung auf pH: 3 ein.

Viskosität: 87 mPas (25 °C)
Feststoffgehalt: 18,0 Gew.-%
organ. Cl-Gehalt: 0,7 %
AOX-Wert: 4,15 g/l

Beispiel 9

Zu einer Vorlage aus 92,3 g einer 50 %igen, wäßrigen Lösung eines Polyamidamins der DE-B-17 71 043, Spalte 4, Zeile 4 bis 25, und 189 ml Wasser tropft man unter Rühren bei 30 °C in 45 Min. 26,0 g Epichlorhydrin und rührt 1 Stunde bei 35 °C nach.

Anschließend heizt man auf 60 °C auf und verdünnt bei steigender Viskosität mit 165 ml Wasser. Man kühlt auf 40 °C ab, stellt mittels einer 45 %igen NaOH-Lösung pH: 10 ein und rührt bis zur gewünschten Viskosität weiter. Nun säuert man durch Zugabe einer Schwefelsäure-Lösung auf pH: 2,5 an und stellt den Feststoffgehalt ein.

Viskosität: 74 mPas (25 °C)
Feststoffgehalt: 15,0 Gew.-%
organ. Cl-Gehalt: 0,37 %
AOX-Wert: 1,95 g/l

Anwendungsbeispiel

Gebleichter Kiefernsulfit-Zellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1 l verdünnt.

2- bzw. 4-Gew.-% des erfindungsgemäßen Produktes (15 Gew.-% Feststoff) werden auf Faserstoff bezogen in das Becherglas gegeben. Nach einer Rührdauer von 3 Minuten werden mit den Inhalten der Bechergläser auf einem Blattbildner (Rapid-Köthen-Gerät) Papierblätter mit einem Flächengewicht von ca. 80 g/m$^2$ gebildet. Die Papierblätter werden bei 90 °C 6 Minuten im Vakuum bei einem Druck von 20 mm Hg getrocknet und im Trockenschrank noch 15 Minuten auf 110 °C nacherhitzt.

Aus jedem Papierblatt werden nach der Klimatisierung 5 Prüfstreifen von 1,5 cm Breite ausgeschnitten und 5 Minuten in destilliertes Wasser eingetaucht. Danach werden die nassen Streifen in eine Zugprüfmaschine eingespannt und die Naßbruchlast bestimmt.

Die erhaltenen Ergebnisse sind in der folgenden Tabelle wiedergegeben.

| Beispiele | Naßbruchlast (Newton) Einsatzmenge | |
|---|---|---|
| | 2 % | 4 % |
| 1 b | 10,9 | 14,7 |
| 2 | 11,6 | 16,5 |
| 3 b | 11,8 | 17,0 |
| 4 | 11,0 | 15,4 |
| 5 b | 11,4 | 16,0 |
| 10 | 11,0 | 16,6 |

Beispiel 10

Zu einer Vorlage von 790 kg einer 50 %igen, wäßrigen Lösung eines Polyamidamins der DE-B-17 71 043, Spalte 4, Zeile 4 bis 25, und 1488 l Wasser pumpt man 30 Minuten 186,5 kg Epichlorhydrin zu und rührt nach Einlaufende 30 Minuten bei 30-35 °C nach. Der Kesselinhalt wird anschließend auf 55 °C aufgeheizt. Sobald eine Viskosität von 55 mPas erreicht ist, verdünnt man durch Zugabe von 1500 l Wasser, kühlt auf 35 °C und stellt beim Abkühlen mittels einer 50 %igen NaOH-Lösung auf pH 9,7 ein.

Nach weiteren 30 Minuten verdünnt man nochmals mit 465 l Wasser und rührt dann bis zum Erreichen der gewünschten Viskosität bei 35 bis 40 °C weiter.

Dann säuert man mit Schwefelsäure auf pH 2,8 an und stellt den gewünschten Feststoffgehalt ein.

Viskosität: 58 mPas (25 °C)
Feststoffgehalt: 15,0 Gew.-%
organ. Cl-Gehalt: 0,30 %
AOX-Wert: 2,4 g/l

**Patentansprüche**

1. Wasserlösliche, vernetzbare Verbindungen, die durch Umsetzung von Halogenhydrin-Gruppen enthaltenden Reaktionsprodukten aus Polyaminen und Epihalogenhydrin oder 1,3-Dihalogen-2-hydroxy-propan mit anorganischen Basen bei einem pH-Wert von 8,5 bis 12 und Beibehalt basischer pH-Werte und anschließende Umsetzung der entstehenden Epoxy-Gruppen enthaltenden Verbindungen mit halogenfreien Säuren oder deren Derivaten bis zu pH-Werten ≦ 6 erhältlich sind.

2. Wasserlösliche, vernetzbare Verbindungen gemäß Anspruch 1, dadurch gekennzeichnet, daß sie durch anschließende Umsetzung der entstehenden Epoxy-Gruppen enthaltenden Verbindungen mit halogenfreien, gegebenenfalls Hydroxy-Gruppen enthaltenden Mono- oder Polycarbonsäuren bzw. deren Derivaten zu 1-Acyloxy-2-hydroxypropyl-Gruppen enthaltenden Verbindungen erhältlich sind.

3. Wasserlösliche Polykondensate nach Anspruch 1, die durch Umsetzung von

A) einem wasserlöslichen, aliphatischen Polyamin mit primären, sekundären und gegebenenfalls tertiären Amino-, Carbonamid-, oder Hydroxy-Gruppen oder Gemischen hieraus

mit

B) einem Epihalogenhydrin oder 1,3-Dihalogen-2-hydroxy-propan und gegebenenfalls gleichzeitige oder anschließende Zugabe eines Polyamins wie in A)

im Molverhältnis von 1,0 bis 3,6 Mol der Komponente B) pro Mol basischer Stickstoff in der insgesamt eingesetzten Komponente A),

C) Umsetzung der Produkte A/B mit einer anorganischen Base im Molverhältnis von 0,1 bis 1,75 Mol Base pro Mol Halogenhydrin-Gruppe in A/B

und

D) Umsetzung der basischen Produkte C) mit einer halogenfreien Säure oder einem Säure-Derivat bis zu pH-Werten ≦ 6

erhältlich sind.

4. Wasserlösliche Polykondensate nach Anspruch 1, die durch Umsetzung von

A.1. einem wasserlöslichen Amin der Formeln

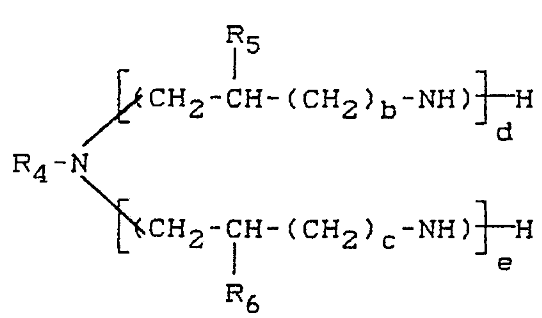

(II)

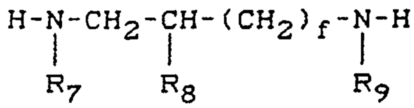

(III)

worin

$R_4$, $R_7$ und $R_9$ für Wasserstoff oder einen gegebenenfalls durch Hydroxy oder Amino substituierten $C_1$-$C_5$-Alkylrest,

$R_5$, $R_6$ und $R_8$ unabhängig voneinander für Wasserstoff, Methyl oder Ethyl,

b, c und f unabhängig voneinander für eine ganze Zahl von 0 bis 4,

d und e unabhängig voneinander für eine ganze Zahl von 1 bis 6

stehen, oder Gemischen hieraus,

und/oder

A2. einem wasserlöslichen Polyamidamin mit einem Molekulargewicht von mindestens 800, hergestellt aus

α) aliphatischen Polyaminen, die mindestens zwei zur Amidbildung befähigte Aminogruppen und mindestens eine weitere sekundäre oder tertiäre Aminogruppe enthalten bzw. aus Gemischen dieser Polyamine mit aliphatischen Diaminen der Formel (III), Ammoniak oder Ethylenimin

und

β) aliphatischen oder aromatischen Dicarbonsäuren mit 2 bis 12 C-Atomen bzw. deren funktionellen Derivaten, wie Anhydriden, Estern oder Halbestern

und/oder

γ) 3 bis 6 C-Atome enthaltenden Aminocarbonsäuren oder deren Lactamen

oder

A3) einem durch Polymerisation von 1,2-Alkyleniminen hergestellten Polyalkylenimin

mit

B. einem Epihalogenhydrin oder 1,3-Dihalogen-2-hydroxy-propan und gegebenenfalls gleichzeitige oder anschließende Zugabe eines Polyamins der Formeln (II) - (III) im Molverhältnis von 1,0 bis 3,6 Mol, bevorzugt 1,1 bis 2,5 Mol, der Komponente B pro Mol Basenstickstoff der insgesamt eingesetzten Komponente A,

C. Umsetzung der Produkte A/B mit einer anorganischen Base im Molverhältnis von 0,1 bis 1,75 Mol, bevorzugt 0,2 bis 1,5 Mol, Base pro Mol Halogenhydrin-Gruppe in A/B

und

D. Umsetzung der basischen Produkte C mit einer halogenfreien Säure oder deren Säure-Derivat bis zu pH-Werten ≦6, bevorzugt 2 bis 5,5

erhältlich sind.

**5.** Wasserlösliche, vernetzbare Verbindungen nach Anspruch 1, deren 5 bis 35 gew.-%ige wässrige Lösungen eine Viskosität von 15 bis 400 mPas bei 25 °C aufweisen.

**6.** Wasserlösliche Polykondensate nach Anspruch 1, mit einem Molekulargewicht von 1.000 - 50.000.

**7.** Verfahren zur Herstellung von wasserlöslichen, vernetzbaren Verbindungen nach Anspruch 1, dadurch gekennzeichnet, daß man Halogenhydrin-Gruppen enthaltende Reaktionsprodukte aus Polyaminen und Epihalogenhydrin oder 1,3-Dihalogen-2-hydroxy-propan mit anorganischen Basen bei einem pH-Wert von 8,5 bis 12 umsetzt, den basischen pH-Wert bei dieser Umsetzung beibehält, und anschließend die entstehenden Epoxy-Gruppen enthaltenden Verbindungen mit halogenfreien Säuren oder deren Derivaten bis zu pH-Werten ≦ 6 umsetzt.

**8.** Verfahren nach Anspruch 7, dadurch gekennzeichnet, daß als anorganische Basen NaOH, KOH, LiOH, CsOH, $Ca(OH)_2$, $CaCO_3$ und/oder $Na_3PO_4$ verwendet werden.

**9.** Verfahren nach Anspruch 7, dadurch gekennzeichnet, daß als halogenfreie Säuren bzw. deren Derivate Amidosulfonsäure, schweflige Säure, Kieselsäure, Borsäure, Salpetersäure, Kohlensäure, Schwefelsaure, Phosphorsäure, Essigsäure, Essigsäureanhydrid, Propionsäure, Oxalsäure, Malonsäure, Bernsteinsäure, Glutarsäure, Adipinsäure, Maleinsäure, Milchsäure, Weinsäure, Ameisensäure, Äpfelsäure und/oder Citronensäure verwendet werden.

10. Verfahren zur Behandlung von Papier, dadurch gekennzeichnet, daß man wasserlösliche, vernetzbare Verbindungen des Anspruchs 1 verwendet.

11. Verfahren zur Nachbehandlung von Reaktiv- und Substantiv-Färbungen auf Baumwolle und zur Ausrüstung von Wolle, dadurch gekennzeichnet, daß man wasserlösliche, vernetzbare Verbindungen des Anspruchs 1 verwendet.

## Claims

1. Water-soluble crosslinkable compounds which are obtainable by reaction of reaction products, containing halogenohydrin groups, of polyamines and epihalogenohydrin or 1,3-dihalogeno-2-hydroxy-propane with inorganic bases at a pH value of 8.5 to 12 and maintaining basic pH values and subsequent reaction of the resulting compounds, which contain epoxy groups, with halogen-free acids or derivatives thereof until a pH value of $\leq 6$ is reached.

2. Water-soluble crosslinkable compounds according to Claim 1, characterised in that they are obtainable by subsequent reaction of the resulting compounds, containing epoxy groups, with halogen-free mono- or polycarboxylic acids, optionally containing hydroxyl groups, or derivatives thereof to give compounds containing 1-acyloxy-2-hydroxypropyl groups.

3. Water-soluble polycondensates according to Claim 1, which are obtainable by reaction of

A) a water-soluble aliphatic polyamine with primary, secondary and if appropriate tertiary amino, carboxamide or hydroxyl groups or mixtures thereof,

with

B) an epihalogenohydrin or 1,3-dihalogeno-2-hydroxy-propane, and if appropriate simultaneous or subsequent addition of a polyamine such as in A)

in a molar ratio of 1.0 to 3.6 mol of component B) per mole of basic nitrogen in the total amount of component A) used,

C) reaction of the products A/B with an inorganic base in a molar ratio of 0.1 to 1.75 mol of base per mole of halogenohydrin group in A/B

and

D) reaction of the basic products C) with a halogen-free acid or acid derivative thereof up until a pH value of $\leq 6$ is reached.

4. Water-soluble polycondensates according to Claim 1, which are obtainable by reaction of

A.1. a water-soluble amine of the formulae

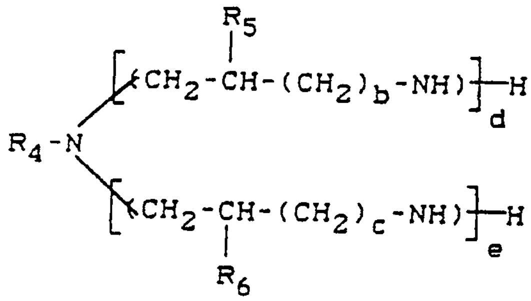

(II)

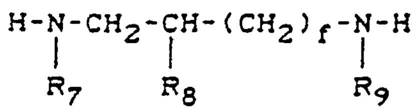

(III)

wherein
$R_4$, $R_7$ and $R_9$ represent hydrogen or a $C_1$-$C_5$-alkyl radical which is optionally substituted by hydroxyl or amino,
$R_5$, $R_6$ and $R_8$ independently of one another represent hydrogen, methyl or ethyl,
b, c and f independently of one another represent an integer from 0 to 4 and
d and e independently of one another represent an integer from 1 to 6,
or mixtures thereof,
and/or
A2. a water-soluble polyamidoamine with a molecular weight of at least 800, prepared from
a) aliphatic polyamines which contain at least two amino groups capable of amide formation and at least one other secondary or tertiary amino group, or of mixtures of these polyamines with aliphatic diamines of the formula (III), ammonia or ethyleneimine,
and
b) aliphatic or aromatic dicarboxylic acids with 2 to 12 C atoms or functional derivatives thereof, such as anhydrides, esters or half-esters,
and/or
c) aminocarboxylic acids containing 3 to 6 C atoms or lactams thereof,
or
A3) a polyalkyleneimine prepared by polymerisation of 1,2-alkyleneimines,

with

B. an epihalogenohydrin or 1,3-dihalogeno-2-hydroxy-propane and if appropriate simultaneous or subsequent addition of a polyamine of the formulae (II) - (III) in a molar ratio of 1.0 to 3.6 mol, preferably 1.1 to 2.5 mol, of component B per mole of basic nitrogen in the total amount of component A used,
C. reaction of the products A/B with an inorganic base in a molar ratio of 0.1 to 1.75 mol, preferably 0.2 to 1.5 mol, of base per mole of halogenohydrin group in A/B

and

D. reaction of the basic products C with a halogen-free acid or acid derivative thereof up to a pH value of ≦ 6, preferably 2 to 5.5.

**5.** Water-soluble crosslinkable compounds according to Claim 1, 5 to 35% strength by weight aqueous solutions of which have a viscosity of 15 to 400 mPas at 25 °C.

**6.** Water-soluble polycondensates according to Claim 1, with a molecular weight of 1,000 - 50,000.

**7.** Process for the preparation of water-soluble crosslinkable compounds according to Claim 1, characterised in that reaction products, containing halogenohydrin groups, of polyamines and epihalogenohydrin or 1,3-dihalogeno-2-hydroxypropane are reacted with inorganic bases at a pH value of 8.5 to 12, the basic pH value is maintained during this reaction, and the resulting compounds, containing epoxy groups, are subsequently reacted with halogen-free acids or derivatives thereof until a pH value of ≦ 6 is reached.

**8.** Process according to Claim 7, characterised in that the inorganic bases used are NaOH, KOH, LiOH, CsOH, $Ca(OH)_2$, $CaCO_3$ and/or $Na_3PO_4$.

**9.** Process according to Claim 7, characterised in that the halogen-free acids or derivatives thereof used are sulphamic acid, sulphurous acid, silicic acid, boric acid, nitric acid, carbonic acid, sulphuric acid, phosphoric acid, acetic acid, acetic anhydride, propionic acid, oxalic acid, malonic acid, succinic acid, glutaric acid, adipic acid, maleic acid, lactic acid, tartaric acid, formic acid, malic acid and/or citric acid.

**10.** Process for the treatment of paper, characterised in that water-soluble crosslinkable compounds of Claim 1 are used.

**11.** Process for the after-treatment of reactive and direct dyeings on cotton and for finishing wool, characterised in that water-soluble crosslinkable compounds of Claim 1 are used.

**Revendications**

**1.** Composés réticulables hydrosolubles, qui sont obtenus par réaction de produits réactionnels porteurs de groupes halogénhydrine, dérivés de polyamines et d'épihalogénhydrine ou de 1,3-dihalogéno-2-hydroxy-propane avec des bases inorganiques à un pH de 8,5 à 12 et maintien de valeurs basiques de pH puis réaction des composés produits contenant des groupes époxy avec des acides non halogénés ou leurs dérivés jusqu'à des valeurs de pH inférieures ou égales à 6.

**2.** Composés réticulables hydrosolubles suivant la revendication 1, caractérisés en ce qu'ils sont obtenus par réaction subséquente des composés porteurs de groupes époxy formés avec des acides monocarboxyliques ou polycarboxyliques non halogénés éventuellement porteurs de groupes hydroxy ou des dérivés de ces acides, pour former des composés contenant des groupes 1-acyloxy-2-hydroxypropyle.

**3.** Polycondensats hydrosolubles suivant la revendication 1, qui sont obtenus par réaction

A) d'une polyamine aliphatique hydrosoluble portant des groupes amino primaires, secondaires, et le cas échéant, tertiaires, carboxamido ou hydroxy ou leurs mélanges

avec

B) une épihalogénhydrine ou un 1,3-dihalogéno-2-hydroxy-propane et, le cas échéant, addition simultanée ou subséquente d'une polyamine comme en A)

dans un rapport molaire de 1,0 à 3,6 moles du composant B) par mole d'azote basique dans le total du composant A) utilisé,

C) réaction des produits A/B avec une base inorganique dans le rapport molaire de 0,1 à 1,75 mole de base par mole de groupe halogénhydrine dans A/B

et

D) réaction des produits C) basiques avec un acide non halogéné ou un dérivé d'acide jusqu'à des valeurs de pH inférieures ou égales à 6.

**4.** Polycondensats hydrosolubles suivant la revendication 1, qui sont obtenus par réaction

A.1. d'une amine hydrosoluble de formules

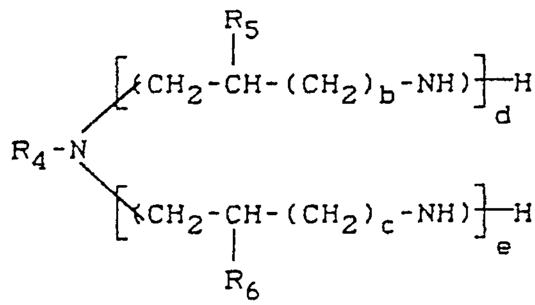

(II)

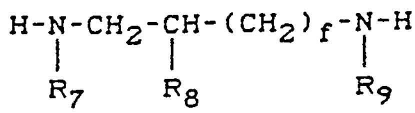

(III)

dans lesquelles

$R_4$, $R_7$ et $R_9$ représentent l'hydrogène ou un reste alkyle en $C_1$ à $C_5$ éventuellement substitué par un radical hydroxy ou amino,

$R_5$, $R_6$ et $R_8$ représentent indépendamment les uns des autres l'hydrogène ou un groupe méthyle ou éthyle,

b, c et f représentent indépendamment les uns des autres un nombre entier de 0 à 4,

d et e représentent indépendamment l'un de l'autre un nombre entier de 1 à 6,

ou leurs mélanges,

et/ou

A.2. une polyamido-amine hydrosoluble ayant un poids moléculaire d'au moins 800, préparée à partir

α) de polyamines aliphatiques qui portent au moins deux groupes amino aptes à former un amide et au moins un groupe amino secondaire ou tertiaire ou de mélanges de ces polyamines avec des diamines aliphatiques de formule (III), l'ammoniac ou l'éthylène-imine

et

β) d'acides dicarboxyliques aliphatiques ou aromatiques ayant 2 à 12 atomes de carbone ou de leurs dérivés fonctionnels tels que des anhydrides, des esters ou des demi-esters

et/ou

γ) d'acides amino-carboxyliques contenant 3 à 6 atomes de carbone ou de leurs lactames

ou

A.3. d'une polyalkylèneimine préparée par polymérisation de 1,2-alkylène-imines

avec

B. Une épihalogénhydrine ou un 1,3-dihalogéno-2-hydroxy-propane et le cas échéant addition simultanée ou subséquente d'une polyamine de formules (II)-(III) dans le rapport molaire de 1,0 à 3,6 moles, de préférence de 1,1 à 2,5 moles, de composant B par mole d'azote basique du total du composant A utilisé,

C. Réaction des produits A/B avec une base inorganique dans le rapport molaire de 0,1 à 1,75 mole, de préférence de 0,2 à 1,5 mole de base par mole de groupe halogénhydrine dans A/B

et

D. Réaction des produits basiques C avec un acide non halogéné ou un dérivé de cet acide jusqu'à des valeurs de pH inférieures ou égales à 6, de préférence comprises entre 2 et 5,5.

**5.** Composés réticulables hydrosolubles suivant la revendication 1, dont les solutions aqueuses à 5-35 % en poids présentent une viscosité à 25° C de 15 à 400 mPa.s.

**6.** Polycondensats hydrosolubles suivant la revendication 1, ayant un poids moléculaire de 1000 à 50 000.

**7.** Procédé de production de composés réticulables hydrosolubles suivant la revendication 1, caractérisé en ce qu'on fait réagir des produits réactionnels, porteurs de groupes halogénhydrine, dérivés de polyamines et d'épihalogénhydrine ou de 1,3-dihalogéno-2-hydroxy-propane avec des bases inorganiques à un pH de 8,5 à 12, on maintient la valeur basique de pH dans cette réaction puis on fait réagir des composés obtenus, porteurs de groupes époxy, avec des acides non halogénés ou leurs dérivés jusqu'à des valeurs de pH inférieures ou égales à 6.

8. Procédé suivant la revendication 7, caractérisé en ce qu'on utilise comme bases inorganiques NaOH, KOH, LiOH, CsOH, $Ca(OH)_2$, $CaCO_3$ et/ou $Na_3PO_4$.

9. Procédé suivant la revendication 7, caractérisé en ce qu'on utilise comme acides non halogénés ou leurs dérivés l'acide amidosulfonique, l'acide sulfureux, l'acide silicique, l'acide borique, l'acide nitrique, l'acide carbonique, l'acide sulfurique, l'acide phosphorique, l'acide acétique, l'anhydride d'acide acétique, l'acide propionique, l'acide oxalique, l'acide malonique, l'acide succinique, l'acide glutarique, l'acide adipique, l'acide maléique, l'acide lactique, l'acide tartrique, l'acide formique, l'acide malique et/ou l'acide citrique.

10. Procédé de traitement de papier, caractérisé en ce qu'on utilise des composés réticulables hydrosolubles suivant la revendication 1.

11. Procédé de post-traitement de teintures réactives et substantives sur coton et d'apprêtage de la laine, caractérisé en ce qu'on utilise des composés réticulables hydrosolubles suivant la revendication 1.